# EUROPEAN PATENT APPLICATION

(11) **EP 4 800 997 A1**
(43) Date of publication of application: **02.09.2026**
(21) Application number: 24890230.6
(22) Date of filing: 14.08.2024
(51) Int. Cl.: H04L 41/5074

(54) **COMMUNICATION METHOD AND DEVICE**

(30) Priority: 13.11.2023 CN 202311510488
(71) Applicant: Huawei Technologies Co., Ltd., Shenzhen, Guangdong 518129 (CN)
(72) Inventor: ZHANG, Yunfei, Shenzhen, Guangdong 518129 (CN); WANG, Min, Shenzhen, Guangdong 518129 (CN); KUAI, Shaofeng, Shenzhen, Guangdong 518129 (CN); HAN, Shuo, Shenzhen, Guangdong 518129 (CN)
(74) Representative: Maiwald GmbH
(86) International application number: PCT/CN2024/111971
(87) International publication number: WO 2025/102867

(57) **Abstract**

This application provides a communication method and apparatus. The method includes: obtaining multi-domain data information, where the multi-domain data information includes first data information and second data information, the first data information is data information related to user service experience, and the second data information is data information related to a wireless key performance indicator of a user service; and determining a digital twin based on the multi-domain data information, where the digital twin includes entity objects and attribute information corresponding to the entity objects, the entity objects include a user entity object, a network function entity, a grid entity object, and a service entity object, the attribute information corresponding to the entity objects includes attribute information of the user entity object, attribute information of the network function entity, attribute information of the grid entity object, and attribute information of the service entity object, and the digital twin is used for network optimization. According to this application, the digital twin can be constructed and used for network optimization, to improve service experience.

## Description

This application claims priority to Chinese Patent Application No. 202311510488.8, filed with the China National Intellectual Property Administration on November 13, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

During network optimization, when user service experience is poor, all related key performance indicators that may cause this service problem are optimized to improve the user service experience. For example, within a specific period of time, if a quantity of game freezing occurrences increases in a cell or a network element, this service problem is dispatched to a network optimization department, and then the network optimization department optimizes all wireless key performance indicators related to the service problem, such as coverage, interference, and capacity, to improve service experience.

### SUMMARY

This application provides a communication method and apparatus, to construct a digital twin. The digital twin is used for network optimization, to improve service experience.

According to a first aspect, an embodiment of this application provides a communication method. The method includes: obtaining multi-domain data information, where the multi-domain data information includes first data information and second data information, the first data information is data information related to user service experience, and the second data information is data information related to a wireless key performance indicator of a user service; and determining a digital twin based on the multi-domain data information, where the digital twin includes entity objects and attribute information corresponding to the entity objects, the entity objects include a user entity object, a network function entity, a grid entity object, and a service entity object, the attribute information corresponding to the entity objects includes attribute information of the user entity object, attribute information of the network function entity, attribute information of the grid entity object, and attribute information of the service entity object, and the digital twin is used for network optimization.

The method may be applied to a server. This means that the method may be performed by the server, or may be performed by a component (for example, a processor, a chip, or a chip system) in the server, or may be performed by a logical module or software that can implement all or some functions of the server.

In the foregoing method, the digital twin is determined based on the multi-domain data information, to fuse the multi-domain data information, so that data for constructing the digital twin is more diversified. In addition, the digital twin can be used for network optimization, to improve service experience.

In a possible implementation, the first data information includes one or more of the following: a user identifier, a service identifier, service type information, service experience information, and network quality data information, and the second data information includes one or more of the following: a network function entity identifier, a grid identifier, the user identifier, network function entity type information, and at least two wireless key performance indicators, where the wireless key performance indicators include reference signal received power RSRP, a signal to interference plus noise ratio SINR, and physical resource block PRB utilization.

In another possible implementation, the attribute information of the user entity object includes the user identifier; the attribute information of the network function entity includes the network function entity type information and the network function entity identifier; the attribute information of the grid entity object includes the grid identifier and grid profile information, where the grid profile information includes grid location information and grid point of interest information; and the attribute of the service entity object includes the service type information and the service identifier.

In still another possible implementation, the digital twin further includes a relationship between the entity objects and time at which the entity objects are related, where the relationship between the entity objects includes one or more of the following: a relationship between the user entity object and the network function entity, a relationship between the user entity object and the grid entity object, a relationship between the user entity object and the service entity object, a relationship between the network function entity and the grid entity object, a relationship between the network function entity and the service entity object, and a relationship between the grid entity object and the service entity object.

In still another possible implementation, the method further includes: mapping the multi-domain data information to determine the grid entity object.

In still another possible implementation, mapping the multi-domain data information to determine the grid entity object includes: mapping the multi-domain data information in a longitude-latitude manner to determine the grid entity object; or mapping the multi-domain data information into a grid based on a cell to determine the grid entity object.

In the foregoing method, the grid entity object is determined by mapping the multi-domain data information in the foregoing two manners, so that the grid entity object can be analyzed more conveniently.

In still another possible implementation, a main factor affecting the service experience information is determined from the at least two wireless key performance indicators based on the digital twin, where the main factor is one of the at least two wireless key performance indicators.

Optionally, efficient relationship query and complex relationship insight analysis capabilities are achieved based on graph-based multi-hop query and relationship computation capabilities. In addition, the main factor may be determined based on a frequent subgraph mining algorithm and the digital twin.

In the foregoing method, a strongly correlated wireless key performance indicator that causes a service problem can be determined based on the digital twin in the foregoing manner with a very high accuracy, which, for example, may be up to 85%, to perform precise optimization. For example, the strongly correlated wireless key performance indicator may be optimized, to resolve the service problem, and improve service experience. This resolves a problem of insufficient correlation between the service problem and the wireless key performance indicator. Compared with optimizing all wireless key performance indicators, this method can achieve efficient use of network optimization resources, to avoid resource waste.

In still another possible implementation, determining, based on the digital twin, the main factor affecting the user service experience information from the at least two wireless key performance indicators includes: determining, based on the digital twin, at least two scores corresponding to the at least two wireless key performance indicators, where each wireless key performance indicator corresponds to one score; and comparing the at least two scores to determine the main factor affecting the service experience information, where the main factor is a wireless key performance indicator with a highest score.

In still another possible implementation, the method further includes: determining value indicators of different types of grids based on the digital twin; and determining value scores of the different types of grids based on the value indicators and weights corresponding to the value indicators.

In the foregoing method, the value scores of the different types of grids may be sorted by determining the value scores of the different types of grids. For example, the different types of grids include a school, a business district, a hospital, and a government. Determining the value scores of the different types of grids may be understood as determining a value score of the school, a value score of the business district, a value score of the hospital, and a value score of the government. The value scores are sorted, to determine a value region. For example, a region with a high value score is a high-value region, so that network optimization can be performed, and network optimization resources can be efficiently used.

In still another possible implementation, the multi-domain data information further includes one or more of the following: data information related to customer management and service, and third-party data information, where the data information related to customer management and service includes one or more of the following: a user package, and whether a user is a very very important person VVIP, and the third-party data information includes one or more of the following: population information, point of interest POI information, and information about a grid that is obtained through division by roads and that has a commercial attribute.

In the foregoing method, the multi-domain data information may not be monotonous and data is more comprehensive in the foregoing manner, so that a constructed digital twin is more accurate.

According to a second aspect, an embodiment of this application provides a communication apparatus. The communication apparatus may be a server, or may be a component (for example, a processor, a chip, or a chip system) in the server, or may be a logical module or software that can implement all or some functions of the server. The communication apparatus includes: an obtaining unit and a first determining unit. The obtaining unit is configured to obtain multi-domain data information, where the multi-domain data information includes first data information and second data information, the first data information is data information related to user service experience, and the second data information is data information related to a wireless key performance indicator of a user service. The first determining unit is configured to determine a digital twin based on the multi-domain data information, where the digital twin includes entity objects and attribute information corresponding to the entity objects, the entity objects include a user entity object, a network function entity, a grid entity object, and a service entity object, the attribute information corresponding to the entity objects includes attribute information of the user entity object, attribute information of the network function entity, attribute information of the grid entity object, and attribute information of the service entity object. The digital twin is used for network optimization.

In a possible implementation, the first data information includes one or more of the following: a user identifier, a service identifier, service type information, service experience information, and network quality data information, and the second data information includes one or more of the following: a network function entity identifier, a grid identifier, the user identifier, network function entity type information, and at least two wireless key performance indicators, where the wireless key performance indicators include reference signal received power RSRP, a signal to interference plus noise ratio SINR, and physical resource block PRB utilization.

In another possible implementation, the attribute information of the user entity object includes the user identifier; the attribute information of the network function entity includes the network function entity type information and the network function entity identifier; the attribute information of the grid entity object includes the grid identifier and grid profile information, where the grid profile information includes grid location information and grid point of interest information; and the attribute of the service entity object includes the service type information and the service identifier.

In still another possible implementation, the digital twin further includes a relationship between the entity objects and time at which the entity objects are related, where the relationship between the entity objects includes one or more of the following: a relationship between the user entity object and the network function entity, a relationship between the user entity object and the grid entity object, a relationship between the user entity object and the service entity object, a relationship between the network function entity and the grid entity object, a relationship between the network function entity and the service entity object, and a relationship between the grid entity object and the service entity object.

In still another possible implementation, the apparatus further includes a mapping unit, where the mapping unit is configured to map the multi-domain data information to determine the grid entity object.

In still another possible implementation, the mapping unit is configured to: map the multi-domain data information in a longitude-latitude manner to determine the grid entity object; or map the multi-domain data information into a grid based on a cell to determine the grid entity object.

In still another possible implementation, the apparatus further includes a second determining unit. The second determining unit is configured to determine, based on the digital twin, a main factor affecting the service experience information from the at least two wireless key performance indicators, where the main factor is one of the at least two wireless key performance indicators.

In still another possible implementation, the second determining unit is configured to determine, based on the digital twin, at least two scores corresponding to the at least two wireless key performance indicators, where each wireless key performance indicator corresponds to one score. The second determining unit is configured to compare the at least two scores to determine the main factor affecting the service experience information, where the main factor is a wireless key performance indicator with a highest score.

In still another possible implementation, the apparatus further includes a third determining unit, where the third determining unit is configured to determine value indicators of different types of grids based on the digital twin; and the third determining unit is configured to determine value scores of the different types of grids based on the value indicators and weights corresponding to the value indicators.

In still another possible implementation, the multi-domain data information further includes one or more of the following: data information related to customer management and service, and third-party data information, where the data information related to customer management and service includes one or more of the following: a user package, and whether a user is a very very important person VVIP, and the third-party data information includes one or more of the following: population information, point of interest POI information, and information about a grid that is obtained through division by roads and that has a commercial attribute.

For technical effects brought by the second aspect or the possible implementations, refer to the descriptions of the technical effects of the first aspect or corresponding implementations.

According to a third aspect, an embodiment of this application provides a communication apparatus. The communication apparatus may be a server, or may be a component (for example, a processor, a chip, or a chip system) in the server, or may be a logical module or software that can implement all or some functions of the server. The communication apparatus includes at least one processor and a communication interface. The at least one processor invokes a computer program or instructions stored in a memory to perform the following operations: obtaining multi-domain data information, where the multi-domain data information includes first data information and second data information, the first data information is data information related to user service experience, and the second data information is data information related to a wireless key performance indicator of a user service; and determining a digital twin based on the multi-domain data information, where the digital twin includes entity objects and attribute information corresponding to the entity objects, the entity objects include a user entity object, a network function entity, a grid entity object, and a service entity object, the attribute information corresponding to the entity objects includes attribute information of the user entity object, attribute information of the network function entity, attribute information of the grid entity object, and attribute information of the service entity object, and the digital twin is used for network optimization.

In a possible implementation, the first data information includes one or more of the following: a user identifier, a service identifier, service type information, service experience information, and network quality data information, and the second data information includes one or more of the following: a network function entity identifier, a grid identifier, the user identifier, network function entity type information, and at least two wireless key performance indicators, where the wireless key performance indicators include reference signal received power RSRP, a signal to interference plus noise ratio SINR, and physical resource block PRB utilization.

In another possible implementation, the attribute information of the user entity object includes the user identifier; the attribute information of the network function entity includes the network function entity type information and the network function entity identifier; the attribute of the grid entity object includes the grid identifier and grid profile information, where the grid profile information includes grid location information and grid point of interest information; and the attribute of the service entity object includes the service type information and the service identifier.

In still another possible implementation, the digital twin further includes a relationship between the entity objects and time at which the entity objects are related, where the relationship between the entity objects includes one or more of the following: a relationship between the user entity object and the network function entity, a relationship between the user entity object and the grid entity object, a relationship between the user entity object and the service entity object, a relationship between the network function entity and the grid entity object, a relationship between the network function entity and the service entity object, and a relationship between the grid entity object and the service entity object.

In still another possible implementation, the processor is further configured to map the multi-domain data information to determine the grid entity object.

In still another possible implementation, the processor is configured to: map the multi-domain data information in a longitude-latitude manner to determine the grid entity object; or map the multi-domain data information into a grid based on a cell to determine the grid entity object.

In still another possible implementation, the processor is further configured to determine, based on the digital twin, a main factor affecting the service experience information from the at least two wireless key performance indicators, where the main factor is one of the at least two wireless key performance indicators.

In still another possible implementation, the processor is further configured to: determine, based on the digital twin, at least two scores corresponding to the at least two wireless key performance indicators, where each wireless key performance indicator corresponds to one score; and compare the at least two scores to determine the main factor affecting the service experience information, where the main factor is a wireless key performance indicator with a highest score.

In still another possible implementation, the processor is further configured to: determine value indicators of different types of grids based on the digital twin; and determine value scores of the different types of grids based on the value indicators and weights corresponding to the value indicators.

In still another possible implementation, the multi-domain data information further includes one or more of the following: data information related to customer management and service, and third-party data information, where the data information related to customer management and service includes one or more of the following: a user package, and whether a user is a very very important person VVIP, and the third-party data information includes one or more of the following: population information, point of interest POI information, and information about a grid that is obtained through division by roads and that has a commercial attribute.

For technical effects brought by the third aspect or the possible implementations, refer to the descriptions of the technical effects of the first aspect or corresponding implementations.

According to a fourth aspect, an embodiment of this application provides a chip apparatus. The chip apparatus includes at least one processor, and the at least one processor is configured to execute a computer program or instructions, to implement the method according to any one of the foregoing aspects.

According to a fifth aspect, an embodiment of this application provides a computer-readable storage medium. The computer-readable storage medium stores a computer program or instructions, and when the computer program or the instructions are run on a processor, the method according to any one of the foregoing aspects is implemented.

According to a sixth aspect, an embodiment of this application provides a computer program product. The computer program product includes a computer program or instructions, and when the computer program or the instructions are run on a computer, the method according to any one of the foregoing aspects is implemented.

### BRIEF DESCRIPTION OF DRAWINGS

FIG. 1 is a diagram of an architecture of a communication system according to an embodiment of this application;
FIG. 2 is a diagram of a process of network problem optimization according to an embodiment of this application;
FIG. 3 is a diagram of a communication method according to an embodiment of this application;
FIG. 4 is a diagram of a user entity object according to an embodiment of this application;
FIG. 5 is a diagram of a network function entity according to an embodiment of this application;
FIG. 6 is a diagram of a grid entity object according to an embodiment of this application;
FIG. 7 is a diagram of a service entity object according to an embodiment of this application;
FIG. 8 is a diagram of a model of a digital twin according to an embodiment of this application;
FIG. 9 is a diagram of a digital twin according to an embodiment of this application;
FIG. 10 is a diagram of a grid entity object and a TAZ-level indicator according to an embodiment of this application;
FIG. 11 is a diagram of determining a main factor according to an embodiment of this application;
FIG. 12 is a diagram of determining a value score according to an embodiment of this application;
FIG. 13 is a diagram of a structure of a communication apparatus according to an embodiment of this application; and
FIG. 14 is a diagram of a structure of another communication apparatus according to an embodiment of this application.

### DESCRIPTION OF EMBODIMENTS

The following clearly and completely describes technical solutions in embodiments of this application with reference to the accompanying drawings in embodiments of this application. Apparently, the described embodiments are merely some embodiments rather than all embodiments of this application. All other embodiments obtained by a person skilled in the art based on embodiments of this application without creative efforts shall fall within the protection scope of this application.

Reference to "one embodiment", "some embodiments", or the like described in this application means that a specific feature, structure, or characteristic described in combination with this embodiment is included in one or more embodiments of this application. Therefore, statements such as "in one embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "have", and variants thereof all mean "include but are not limited to", unless otherwise specifically emphasized in another manner.

In descriptions of this application, unless otherwise specified, "/" means "or". For example, A/B may indicate A or B. "And/or" in this specification merely describes an association relationship between associated objects, and indicates that three relationships may exist. For example, A and/or B may indicate the following three cases: Only A exists; both A and B exist; and only B exists. In addition, "at least one" means one or more, and "a plurality of" means two or more. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

It may be understood that in this application, an "indication" may include a direct indication, an indirect indication, an explicit indication, or an implicit indication. When a piece of indication information indicates A, it may be understood as that the indication information carries A, directly indicates A, or indirectly indicates A.

In this application, information indicated by the indication information is referred to as to-be-indicated information. In a specific implementation process, there are many manners of indicating the to-be-indicated information. For example but not limited to, the to-be-indicated information such as the to-be-indicated information or an index of the to-be-indicated information, may be directly indicated, or the to-be-indicated information may be indirectly indicated by indicating other information. An association relationship exists between the other information and the to-be-indicated information. Alternatively, only a part of the to-be-indicated information may be indicated, and another part of the to-be-indicated information is known or agreed in advance. For example, specific information may further be indicated by using a pre-agreed (for example, protocol-specified) arrangement sequence of each piece of information, to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device.

It may be understood that "sending" and "receiving" in this application indicate a signal transmission direction. For example, "sending information to XX" may be understood as that a destination end of the information is the XX, and may include direct sending through an air interface, or include indirect sending through an air interface by another unit or module. "Receiving information from YY" may be understood as that a source end of the information is the YY, and may include directly receiving the information from the YY through an air interface, or may include indirectly receiving the information from the YY from another unit or module through an air interface. "Sending" may also be understood as "outputting" of a chip interface, and "receiving" may also be understood as "inputting" of the chip interface.

In other words, sending and receiving may be performed between devices, for example, between a network device and a terminal device, or may be performed in a device, for example, sending or receiving is performed between components, modules, chips, software modules, or hardware modules in a device through a bus, a cable, or an interface.

It may be understood that necessary processing, such as encoding and modulation, may be performed on information between a source end at which the information is sent and a destination end, but the destination end may understand valid information from the source end. Similar descriptions in this application may be understood similarly, and details are not described again.

A communication method provided in embodiments of this application may be applied to a cellular communication system related to a 3rd generation partnership project (3rd generation partnership project, 3GPP), for example, a 4th generation (4th generation, 4G) communication system, for example, a long term evolution (long term evolution, LTE) communication system, or may be applied to a 5th generation (5th generation, 5G) communication system, for example, a 5G new radio (new radio, NR) communication system, or may be applied to various future communication systems, for example, a 6th generation (6th generation, 6G) communication system. The method provided in embodiments of this application may be further applied to a Bluetooth system, a wireless fidelity (wireless fidelity, Wi-Fi) system, a LoRa system or a vehicle to everything system, a communication system that supports integration of a plurality of wireless technologies, and a device-to-device (device-to-device, D2D) system. The method provided in embodiments of this application may be further applied to a satellite communication system. The satellite communication system may be integrated with the foregoing communication system. The wireless communication system in this application further includes but is not limited to: a narrow band-internet of things (narrow band-internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, or a time division-synchronization code division multiple access (time division-synchronization code division multiple access, TD-SCDMA) system.

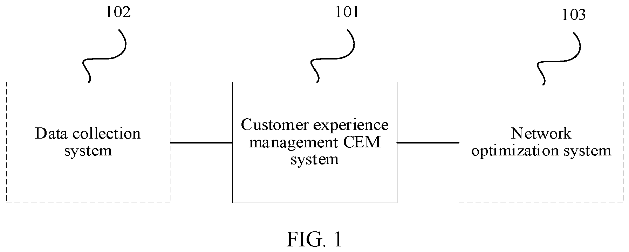

FIG. 1 is a diagram of an architecture of a communication system according to an embodiment of this application. The communication system shown in FIG. 1 is used as an example to describe an application scenario used in this application. The communication system may be deployed in an independent server or a server cluster including a plurality of servers. The communication system may include a customer experience management (customer experience management, CEM) system 101. Optionally, the communication system may further include a data collection system 102 and a network optimization system 103. Optionally, the data collection system 102 may be configured to collect multi-domain data information, where the multi-domain data information includes first data information and second data information, the first data information is data information related to user service experience, the second data information is data information related to a wireless key performance indicator of a user service; and the CEM system 101 obtains the multi-domain data information. Optionally, the CEM system 101 may obtain the multi-domain data information from the data collection system 102, and then determine a digital twin based on the multi-domain data information, where the digital twin includes entity objects and attribute information corresponding to the entity objects, the entity objects include a user entity object, a network function entity, a grid entity object, and a service entity object, the attribute information corresponding to the entity objects includes attribute information of the user entity object, attribute information of the network function entity, attribute information of the grid entity object, and attribute information of the service entity object, and the digital twin is used for network optimization. The CEM system 101 may further determine, based on the digital twin, a main factor affecting service experience information from at least two wireless key performance indicators, and the CEM system 101 may further determine value indicators of different types of grids based on the digital twin, and determine value scores of the different types of grids based on the value indicators and weights corresponding to the value indicators. The network optimization system 103 may obtain, from the CEM system 101, the main factor affecting the service experience information, to perform network optimization on a service corresponding to the main factor; or may obtain, from the CEM system 101, the value scores of the different types of grids, and perform network optimization based on the value scores of the different types of grids.

With reference to the communication system shown in FIG. 1, the following describes in detail the communication method provided in embodiments of this application.

To better understand solutions provided in embodiments of this application, the following first describes some terms, concepts, or procedures in embodiments of this application.

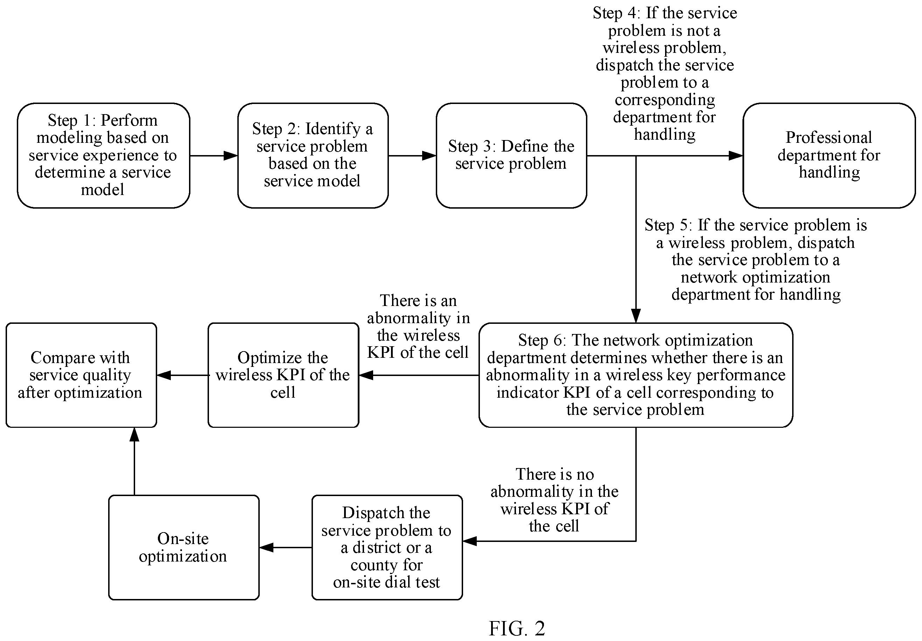

During network optimization, FIG. 2 is a diagram of a process of network problem optimization according to an embodiment of this application.

Step 1: Perform modeling based on service experience to determine a service model.

For example, for a game, a quantity of stuttering occurrences is counted.

Step 2: Identify a service problem based on the service model.

For example, the service problem may be an increase in a quantity of game freezing occurrences in a cell or a network element at a specific moment.

Step 3: Define the service problem.

It may be understood that the service problem is a wireless problem, a transmission problem, a core network problem, or the like.

Step 4: If the service problem is not a wireless problem, dispatch the service problem to a corresponding department for handling.

For example, if the service problem is a core network problem, the service problem is dispatched to a core network-related department of an operator for handling.

Step 5: If the service problem is a wireless problem, dispatch the service problem to a network optimization department for handling.

Information about the dispatching includes a cell corresponding to the service problem and the service problem.

Step 6: The network optimization department determines whether there is an abnormality in a wireless key performance indicator (key performance indicator, KPI) of the cell corresponding to the service problem.

If there is an abnormality, all wireless KPIs of the cell are optimized. The wireless KPI may include one or more of the following: a signal to interference plus noise ratio (signal to interference plus noise ratio, SINR), reference signal received power (reference signal received power, RSRP), and physical resource block (physical resource block, PRB) utilization. Whether optimization is successful is determined through comparison with service quality after optimization. If there is no abnormality, the service problem may be dispatched to a district or a county for on-site optimization.

When user service experience is poor, all related key performance indicators that may cause the service problem are optimized to improve the user service experience. However, this approach fails to optimize, in a targeted manner, a service indicator corresponding to the service problem. In other words, a main factor that causes the service problem, namely, the most related wireless key performance indicator in all the wireless key performance indicators, cannot be determined for precise optimization, leading to resource waste.

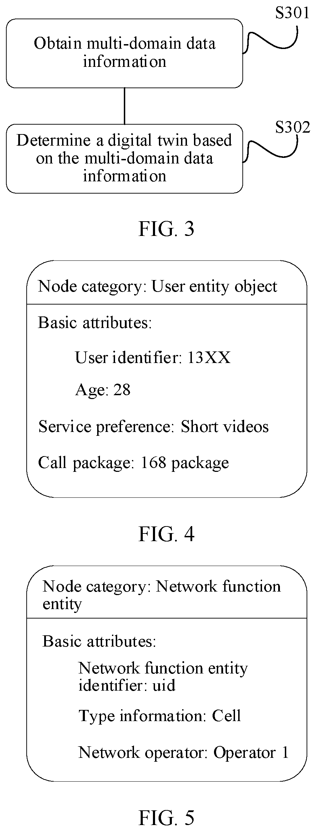

FIG. 3 is a diagram of a communication method according to an embodiment of this application. The method includes but is not limited to the following steps.

Step S301: Obtain multi-domain data information.

The multi-domain data information includes first data information and second data information. The first data information is data information related to user service experience. The first data information may include one or more of the following: a user identifier, a service identifier, service type information, service experience information, and network quality data information. The user identifier and the service identifier are mandatory, and the service type information, the service experience information, and the network quality data information are optional. The service type information may be category information of a service initiated by a user, for example, may be a video, a game, instant messaging (instant messaging, IM), livestreaming, or other information. This is not limited in embodiments of this application. The service experience information may be data information obtained by measuring a key quality indicator (key quality indicator, KQI) of service experience after a user initiates a service, for example, may be an effective download rate, stuttering, or other information. This is not limited in embodiments of this application. The network quality data information may be data information obtained by measuring a key performance indicator (key performance indicator, KPI) of a network after a user initiates a service, for example, may be network latency, an uplink/downlink packet loss rate, or other information. This is not limited in embodiments of this application.

The second data information is data information related to a wireless key performance indicator of a user service. For example, the second data information may include a measurement report (measurement report, MR), where the measurement report includes network original data measured by a user terminal, and the measurement report carries relevant information of an uplink and downlink wireless link. The relevant information may include a received signal code power (received signal code power, RSCP), interference signal code power (interference signal code power, ISCP), a block error rate (block error rate, BLER), and transmit power. For example, the second data information may include a call history record (call history record, CHR), where the CHR is a log file used by a network device to record a problem encountered by a user during a call. The second data information may include one or more of the following: a network function entity identifier, a grid identifier, the user identifier, network function entity type information, and at least two wireless key performance indicators. The network function entity identifier, the grid identifier, and the user identifier are mandatory, and the network function entity type information and the at least two wireless key performance indicators are optional. The network function entity type information may be a cell, a base station, a core network element, or the like. The wireless key performance indicators may include RSRP, SINR, and PRB utilization. Optionally, the first data information and the second data information are referred to as operation support system (operation support system, OSS) domain data information, and may be referred to as O-domain data information for short. Optionally, the first data information and the second data information in the multi-domain data information may be obtained from a data collection system or a network management system. Optionally, the data collection system may be a probe, deployed between core network elements, and configured to collect network data in real time.

Optionally, the multi-domain data information may further include one or more of the following: data information related to customer management and service, and third-party data information. Optionally, the data information related to customer management and service includes one or more of the following: a call package, whether a user is a very very important person VVIP, average revenue per user (average revenue per user, ARPU), complaint information, roaming information, data package information, whether a user is deregistered, whether a user is a detractor, whether a user is in arrears, and whether a user is with speed limit. The ARPU refers to average communication service revenue contributed by each user within a period of time (usually one month or one year). Optionally, the data information related to customer management and service may be obtained from an operator. Optionally, the data information related to customer management and service may be referred to as business support system (business support system, BSS) domain data information, and may be referred to as B-domain data information for short. The third-party data information includes one or more of the following: population information, point of interest (point of interest, POI) information, and information about a grid that is obtained through division by roads and that has a commercial attribute. For example, the POI information may be a higher education institution, a factory, a residential area, or other information. This is not limited in embodiments of this application. Optionally, the third-party data information may be purchased from a third party. For example, the POI information may be purchased from a map company. Optionally, the third-party data information may be referred to as S-domain data information for short. The multi-domain data information may not be monotonous and data is more comprehensive in the foregoing manner, so that a constructed digital twin is more accurate.

Step S302: Determine the digital twin based on the multi-domain data information.

The digital twin includes entity objects and attribute information corresponding to the entity objects, the entity objects include a user entity object, a network function entity, a grid entity object, and a service entity object, the attribute information corresponding to the entity objects includes attribute information of the user entity object, attribute information of the network function entity, attribute information of the grid entity object, and attribute information of the service entity object, and the digital twin is used for network optimization. Determining the digital twin based on the multi-domain data information may specifically include: generating the entity objects based on information about identifiers in the first data information and the second data information in the multi-domain data information, for example, generating the user entity object based on the user identifier in the first data information, generating the service entity object based on the service identifier and the service type information in the first data information, generating the network function entity based on the network function entity identifier and the network function entity type information in the second data information, and determining the grid entity object based on the multi-domain data information. A specific determining manner is correspondingly described below. Optionally, the digital twin may be represented by using a graph model.

The attribute information of the user entity object includes a user identifier, and optionally, may further include user information. Optionally, the user identifier may be a mobile phone number of the user, and the user information may be an age, a call package, a service preference, or the like of the user. The user information may be obtained from a BSS, or may be obtained from user data in an OSS by using a machine learning method. In an example, FIG. 4 is a diagram of a user entity object according to an embodiment of this application. Attribute information of the user entity object includes: A user identifier is 13XXX, an age is 28 years old, a service preference is short videos, and a call package is a 168 package.

The attribute information of the network function entity includes the network function entity type information and the network function entity identifier. The network function entity type information may be a cell, a base station, a core network element, or the like. Different types of network function entities may use different identifiers as network function entity identifiers. For example, a cell may use a cell identity as a network function entity identifier. Optionally, the attribute information of the network function entity may further include parameter information of the network function entity, for example, may include a network operator or a service internet protocol address (internet protocol address, IP). In an example, FIG. 5 is a diagram of a network function entity according to an embodiment of this application. Attribute information of the network function entity includes: Network function entity type information is a cell, a network function entity identifier is uid, and a network operator is an operator 1.

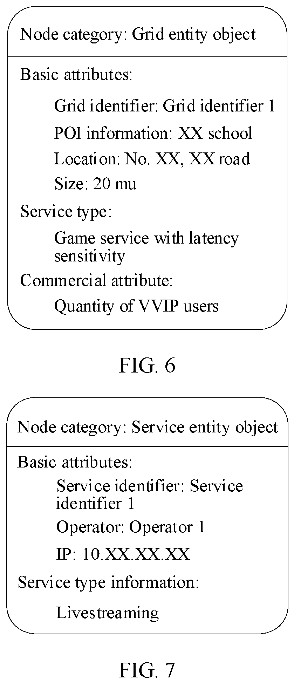

The attribute information of the grid entity object includes the grid identifier and grid profile information. The grid profile information includes grid location information and grid POI information. The grid location information may be understood as a size of a grid coverage area and a grid location. The grid POI information may be understood as a classification, for example, may be a higher education institution, a factory, a residential area, or a business district. In an example, FIG. 6 is a diagram of a grid entity object according to an embodiment of this application. Attribute information of the grid entity object includes: A grid identifier is a grid identifier 1, grid POI information is an XX school, grid location information includes No. XX, XX road, a size of a grid coverage area is 20 mu, a service type is mainly focused on a game service with latency sensitivity, and a commercial attribute is a quantity of VVIP users.

The attribute information of the service entity object includes the service type information and the service identifier, and may further include a service attribute. The service type information may be category information of a service initiated by a user, for example, may be a video, a game, IM, or livestreaming. This is not limited in embodiments of this application. The service attribute may be an operator of the service, an IP of the service, or the like. In an example, FIG. 7 is a diagram of a service entity object according to an embodiment of this application. Attribute information of the service entity object includes: A service identifier is a service identifier 1, an operator is an operator 1, an IP is 10.XX.XX.XX, and service type information is livestreaming.

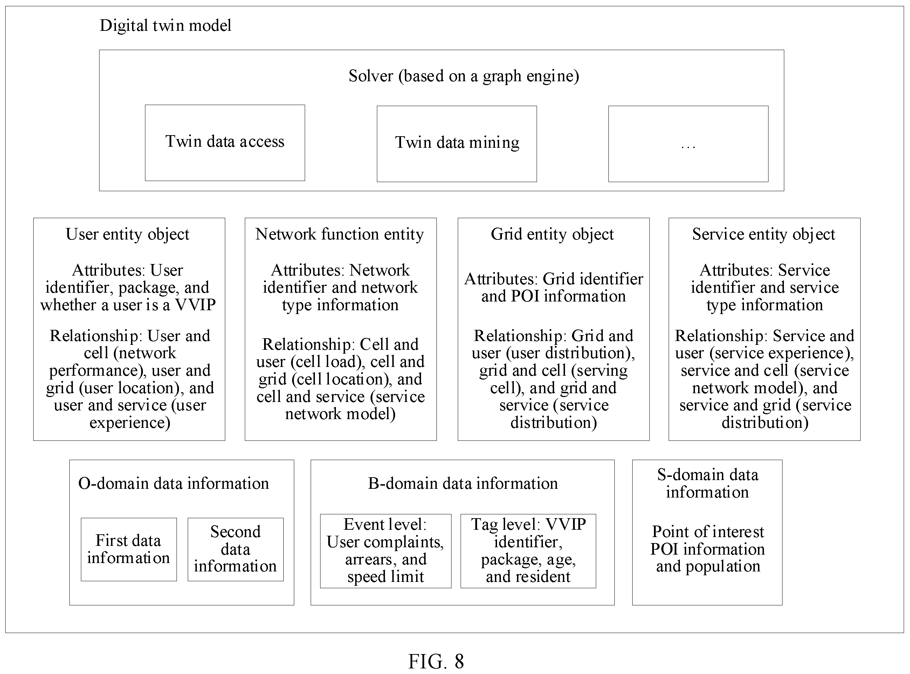

The digital twin further includes a relationship between entity objects and time at which the entity objects are related. The relationship between entity objects includes one or more of the following: a relationship between the user entity object and the network function entity, a relationship between the user entity object and the grid entity object, a relationship between the user entity object and the service entity object, a relationship between the network function entity and the grid entity object, a relationship between the network function entity and the service entity object, and a relationship between the grid entity object and the service entity object. Optionally, the relationship between the user entity object and the network function entity may include network performance or load. For example, the network function entity is a cell. The network performance may refer to latency, bandwidth, jitter, a packet loss, or the like of a user in the cell. The load may be understood as cell load, for example, a maximum quantity of users in the cell. The relationship between the user entity object and the grid entity object may include a user location or user distribution, for example, whether a user is in a grid, and a user distribution status in the grid. The relationship between the user entity object and the service entity object may include user experience, for example, may include service experience information, where the service experience information includes stuttering, an effective download rate, and the like. The relationship between the network function entity and the grid entity object includes location information or a quantity of network function entities served in a grid. For example, the network function entity is a cell, the location information may be understood as whether the cell is in the grid, the quantity of network function entities served in the grid may be a quantity of serving cells in the grid. The relationship between the network function entity and the service entity object includes a service network model or a service distribution status in the grid. The service network model may be understood as a service and a network. The service may be, for example, a video service or a game service. A network indicator may be, for example, a pipeline transmission indicator or a latency rate of the network. In an example, FIG. 8 is a diagram of a model of a digital twin. The digital twin includes four entity objects and relationships between the four entity objects.

Optionally, when the digital twin is represented by using a graph model, a relationship between entity objects may be described by using an edge between nodes, in other words, the edge is for periodically describing an association between the entity objects, for example, content of network quality data information and a wireless key performance indicator when an XX service is provided at xx time. Optionally, each edge may have a plurality of attributes. Optionally, attribute information of the edge may include time at which entity objects are related. Optionally, the attribute information of the edge may further include the service experience information and the network quality data information in the first data information, and may further include the at least two wireless key performance indicators in the second data information. The time at which the entity objects are related may be a moment or a period of time at which the entity objects are related. Optionally, a relationship between entity objects (content of a provided service, service experience information, network quality data information, and a wireless key performance indicator at a moment XX) may be constructed based on OSS domain data information. Each time a service is initiated, the first data information and the second data information are generated. However, values of data collected each time are different. In this case, the first data information and the second data information may be associated by using a user identifier and time. For example, a user with a user identifier of 13XX initiates a game service at a moment T1, where a service identifier of the game service is a service identifier 2, duration is x hours, service experience information is stuttering, network quality data information includes an effective downlink rate of XX and a packet loss rate of XX, and at least two wireless key performance indicators include SRSP of XX, an SINR of XX, and PRB utilization of XX. When collected data includes an identifier of an entity object A and an identifier of an entity object B, A and B are related. In this example, the user identifier of 13XX and the service identifier of the service identifier 2 are included, in other words, the user entity object and the service entity object are related.

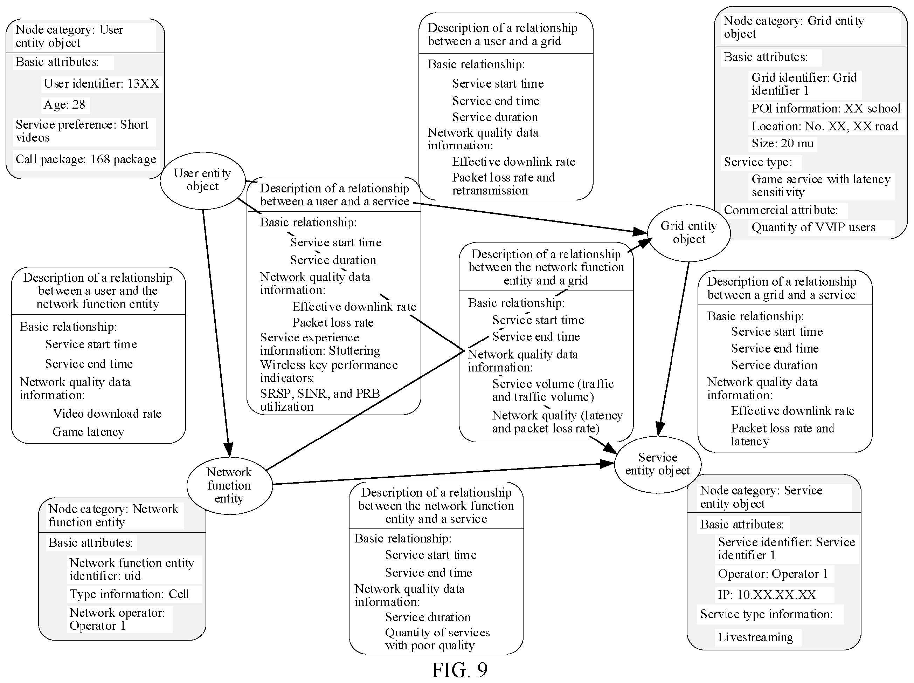

In an example, FIG. 9 is a diagram of a digital twin according to an embodiment of this application. The digital twin includes a user entity object, a network function entity, a grid entity object, and a service entity object. Attribute information of the user entity object includes: A user identifier is 13XXX, an age is 28 years old, a service preference is short videos, and a call package is a 168 package. Attribute information of the network function entity includes: Network function entity type information is a cell, a network function entity identifier is uid, and a network operator is an operator 1. Attribute information of the grid entity object includes: A grid identifier is a grid identifier 1, grid POI information is an XX school, grid location information includes No. XX, XX road, a size of a grid coverage area is 20 mu, a service type is mainly focused on a game service with latency sensitivity, and a commercial attribute is a quantity of VVIP users. Attribute information of the service entity object includes: A service identifier is a service identifier 1, an operator is an operator 1, an IP is 10.XX.XXXX, and service type information is livestreaming. The digital twin further includes a relationship between entity objects. For details, refer to descriptions in FIG. 9. It should be noted that the descriptions of the relationship between entity objects in FIG. 9 are merely used as an example. Relationships between entity objects, namely, attributes of an edge, may vary with different analysis scenarios.

In a possible implementation, before the twin is determined based on the multi-domain data information, the multi-domain data information may further be mapped to determine the grid entity object. Specifically, there may be the following two mapping manners.

In a first mapping manner, the multi-domain data information may be mapped in a longitude-latitude manner to determine the grid entity object.

Specifically, the first data information may be associated with the second data information by using 5-tuple information (AMF Region ID, AMF Set ID, AMF Pointer, AMF_UE_NGAP_ID), to fill in longitude and latitude information. <AMF Region ID> identifies a region, <AMF Set ID> uniquely identifies an authentication management function (authentication management function, AMF) set in an AMF region, <AMF Pointer> identifies one or more AMFs in the AMF set, and AMF UE NGAP ID is for identifying UE in an AMF at a N2 reference point. For example, the first data information may include the user identifier, the service identifier, the service type information, the service experience information, the network quality data information, a region in which a user is located, and location information of the user. The second data information may include the network function entity identifier, the grid identifier, the user identifier, the network function entity type information, and the at least two wireless key performance indicators. A quantity of users and the like in a grid entity object may be determined based on the first data information and the second data information. For example, when the grid entity object is a higher education institution, a quantity of users, high-frequency video traffic, a high-frequency video download volume, and a download rate in the higher education institution at a specific time node may be determined. The longitude and latitude information may be used to implement more accurate mapping of the multi-domain data information, so as to determine the grid entity object.

In a second mapping manner, the multi-domain data information is mapped into a grid based on a cell to determine the grid entity object.

Specifically, the multi-domain data information may be mapped based on a quantity of wireless MRs in a cell and quality of the MRs to determine the grid entity object. For example, a base station 1 covers two grid entity objects: a grid 1 and a grid 2. For the grid 1, a network function entity identifier is a grid identifier 1, network POI information is an XX school, grid location information includes No. 01, XX road, and a size of a grid coverage area is 20 mu. For the grid 2, a network function entity identifier is a grid identifier 2, network POI information is an XX shopping mall, grid location information includes No. 02, XX road, and a size of a grid coverage area is 3000 square meters. For example, total traffic used by a user 1 in the base station 1 is XX, and a quantity of MRs in the grid 1 and a quantity of MRs in the grid 2 may be determined based on configuration information of the base station, so that proportions of traffic used by the user 1 in the grid 1 and traffic used by the user 1 in the grid 2 may be determined based on the quantity of MRs in the grid 1 and the quantity of MRs in the grid 2, to finally determine traffic used by the user 1 in the grid 1 and traffic used by the user 1 in the grid 2.

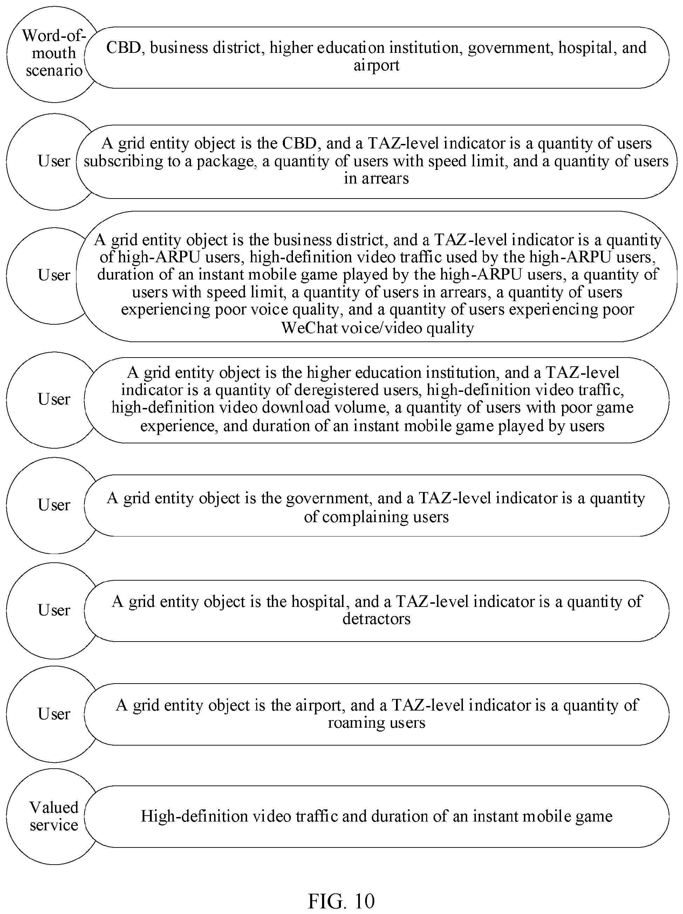

In conclusion, in the foregoing two mapping manners, after the multi-domain data information is mapped to determine the grid entity object, a traffic autonomous zone (traffic autonomous zone, TAZ)-level indicator may be determined from the grid entity object. Optionally, the TAZ-level indicator may be the attribute information of the grid entity object. For example, FIG. 10 is a diagram of a grid entity object and a TAZ-level indicator according to an embodiment of this application. For example, the grid entity object is a central business district (central business district, CBD), and the TAZ-level indicator is a quantity of users subscribing to a package, a quantity of users with speed limit, and a quantity of users in arrears in the CBD. For example, if the grid entity object is a business district, the TAZ-level indicator may be a quantity of high-ARPU users, high-definition video traffic used by the high-ARPU users, duration of an instant mobile game played by the high-ARPU users, a quantity of users with speed limit, a quantity of users in arrears, a quantity of users experiencing poor voice quality, and a quantity of users experiencing poor WeChat voice/video quality in the business district. For example, if the grid entity object is a higher education institution, the TAZ-level indicator may be a quantity of deregistered users, high-definition video traffic, a high-definition video download volume, a quantity of users with poor game experience, and duration of an instant mobile game played by users in the higher education institution. For example, if the grid entity object is a government, the TAZ-level indicator may be a quantity of complaining users. For example, if the grid entity object is a hospital, the TAZ-level indicator may be a quantity of detractors. For example, if the grid entity object is an airport, the TAZ-level indicator may be a quantity of roaming users. Optionally, a high-value service, for example, high-definition video traffic and duration of an instant mobile game, may be determined based on the TAZ-level indicator. Optionally, a grid including the TAZ-level indicator may be referred to as a TAZ grid for short. The TAZ grid is a block unit for optimization and service basic network planning, a source of a user service requirement, a basis for estimating a network basic resource requirement, and a basis for performing a space-based differentiated policy. Multi-scale grids can be provided for different service requirements (planning, construction, operations and maintenance, optimization, and the like). Differentiated strategies are performed in a manner of one policy for one grid. A grid seamlessly covers a planning region, carries diverse information, and includes a plurality of service forms.

In an example, it may be determined, based on the information about the grid that is obtained through division by roads and that has a commercial attribute and the POI information that are in the third-party data information, that a grid identifier of the grid entity object is a grid identifier 1, grid POI information is an XX school, grid location information includes No. XX, XX road, and a size of a grid coverage area is 20 mu. Then, a service type that is of the XX school and that is mainly focused on a game service, a quantity of users with poor game experience, high-definition video traffic, a high-definition video download volume, and duration of an instant mobile game played by users are determined based on the population information in the third-party data and by collecting statistics on the first data information and the second data information.

In the foregoing method, the grid entity object is determined by mapping the multi-domain data information in the foregoing two manners, so that the grid entity object can be analyzed more conveniently.

In another possible implementation, after the digital twin is determined, the method further includes: determining, based on the digital twin, a main factor affecting the service experience information from the at least two wireless key performance indicators.

Optionally, the main factor is one of the at least two wireless key performance indicators.

Optionally, at least two scores corresponding to the at least two wireless key performance indicators may be determined based on the digital twin, and the at least two scores are compared to determine the main factor affecting the service experience information. Each wireless key performance indicator corresponds to one score, and the main factor affecting the service experience information is a wireless key performance indicator with a highest score. Optionally, determining, based on the digital twin, the main factor affecting the service experience information from the at least two wireless key performance indicators may be understood as: determining, based on the digital twin, a root cause relationship between the service experience information in the first data information and the at least two wireless key performance indicators in the second data information, or determining, based on the digital twin, the service experience information in the first data information and a wireless key performance indicator that strongly affects the service experience information, or determining, based on the digital twin, the service experience information in the first data information and a main factor, a non-main factor, and the like that affect the service experience information. Optionally, after the main factor is determined, the main factor may be optimized, to improve service experience.

Optionally, the main factor affecting the service experience information may be determined from the at least two wireless key performance indicators based on a relationship computing capability of the digital twin, namely, graph-based multi-hop query and a relationship computing capability, and by using a frequent subgraph item mining, namely, a frequent subgraph mining (Frequent Subgraph Mining) algorithm. In other words, this may be understood as determining correlation between the service experience information and the wireless key performance indicators. For example, the service experience information is game freezing, and the main factor is RSRP, in other words, the main factor causing the game freezing is the RSRP.

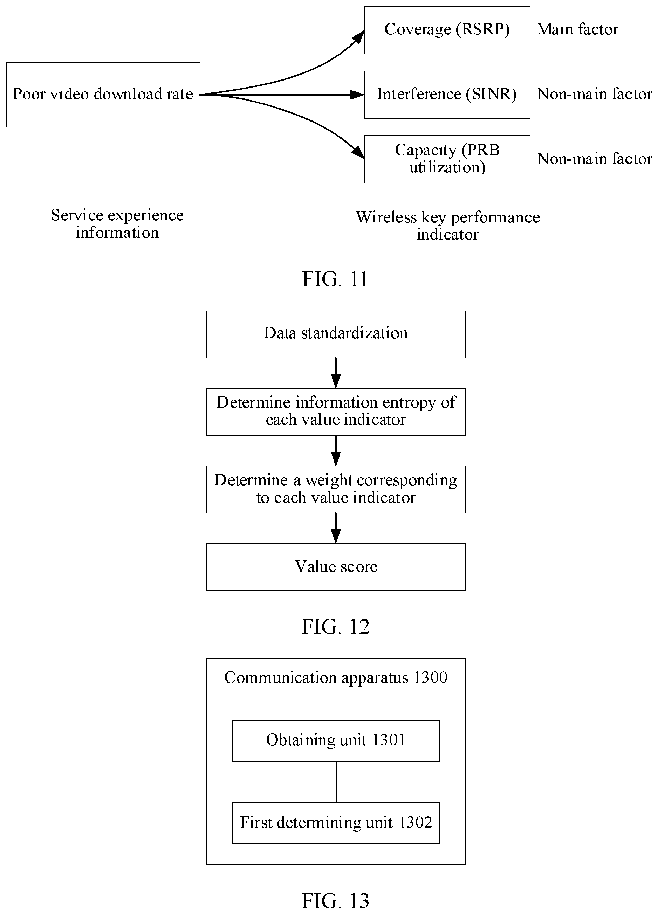

In an example, FIG. 11 is a diagram of determining a main factor according to an embodiment of this application. It is assumed that first data information includes a user with a user identifier of 13XX initiating a game service at a moment T1, where a service identifier of the game service is a service identifier 2, duration is x hours, service experience information is a poor video download rate, and network quality data information includes an effective downlink rate of XX and a packet loss rate of XX, and second data information includes the user identifier of 13XX, and at least two wireless key performance indicators that include SRSP of XX, an SINR of XX, and PRB utilization of XX. Optionally, a wireless key performance indicator affecting the poor video download rate may be determined based on the digital twin by using the frequent subgraph mining algorithm. The SRSP corresponds to a score 1, the SINR corresponds to a score 2, and the PRB utilization corresponds to a score 3. The score 1 is greater than the score 2, and the score 1 is greater than the score 3. Therefore, the SRSP is the main factor affecting the poor video download rate, and optionally, the SINR and the PRB utilization are non-major factors that affect the poor video download rate.

In the foregoing method, a strongly correlated wireless key performance indicator that causes a service problem can be determined based on the digital twin in the foregoing manner with a very high accuracy, which, for example, may be up to 85%, to perform precise optimization. For example, the strongly correlated wireless key performance indicator may be optimized, to resolve the service problem, and improve service experience. This resolves a problem of insufficient correlation between the service problem and the wireless key performance indicator. Compared with optimizing all wireless key performance indicators, this method can achieve efficient use of network optimization resources, to avoid resource waste.

In still another possible implementation, after the digital twin is determined, the method further includes: determining value indicators of different types of grids based on the digital twin; and determining value scores of the different types of grids based on the value indicators and weights corresponding to the value indicators.

Optionally, the value indicator may be the foregoing TAZ-level indicator. Optionally, the different types of grids may be understood as grids with different POI information. In an example, it is determined, based on the digital twin, that a grid identifier is a grid identifier 1, grid POI information is an XX school, and grid location information includes No. 01, XX road, and a value indicator may include a quantity of users with poor game experience, high-definition video traffic, a high-definition video download volume, and duration of an instant mobile game played by a user. In other words, a value indicator corresponding to the XX school may be determined based on the digital twin. In another example, it is determined, based on the digital twin, that a grid identifier is a grid identifier 2, grid POI information is a business district XX, and grid location information includes No. 02, XX road, and a value indicator may include a quantity of high-ARPU users, high-definition video traffic used by the high-ARPU users, duration of an instant mobile game played by the high-ARPU users, a quantity of users experiencing poor voice quality, and a quantity of users experiencing poor WeChat voice/video quality in the business district. In other words, a value indicator corresponding to the business district XX may be determined based on the digital twin. Alternatively, when a grid is of another type, a corresponding value indicator may include a quantity of VVIP users, a quantity of complaining users, and the like.

Optionally, the weight corresponding to the value indicator may be determined based on an entropy weight method. For specific steps, refer to FIG. 12 that is a diagram of determining a value score according to an embodiment of this application. First, data standardization is performed on a value indicator, then information entropy of the value indicator is determined, then a weight corresponding to the value indicator is determined, and finally value scores of different types of grids are determined. In an example, the value indicator that corresponds to the XX school and that is determined based on the digital twin may include a quantity of users with poor game experience, high-definition video traffic, a high-definition video download volume, and duration of an instant mobile game played by a user. Data standardization is performed on the value indicator. For example, data standardization is performed on the quantity of users with poor game experience, the high-definition video traffic, the high-definition video download volume, and the duration of the instant mobile game played by the user, which are respectively denoted as X1, X2, X3, and X4. Then, the weight corresponding to the value indicator is determined based on the entropy weight method. For example, weights corresponding to the quantity of users with poor game experience, the high-definition video traffic, the high-definition video download volume, and the duration of the instant mobile game played by the user are w1, w2, w3, and w4, respectively. Finally, a value score of the XX school is determined as (w1*X1+w2*X2+w3*X3+w4*X4). The foregoing is merely an example of determining a value score of one type of grid, namely, an example of determining the value score of the XX school. Certainly, for determining a value score of another type of grid, refer to the foregoing descriptions. For example, a value score of an XX business district, a value score of a hospital, and the like may be further determined. Correspondingly, after value scores of different types of grids are determined, the value scores may be sorted, to determine a value region. For example, a region with a high value score is a high-value region, so that network optimization is performed, such as generating an optimization solution and selecting an optimization region.

In the foregoing method, the value scores of the different types of grids may be sorted by determining the value scores of the different types of grids. For example, the different types of grids include a school, a business district, a hospital, and a government. Determining the value scores of the different types of grids may be understood as determining a value score of the school, a value score of the business district, a value score of the hospital, and a value score of the government. The value scores are sorted, to determine the value region. For example, a region with a high value score is a high-value region, so that network optimization can be performed, and network optimization resources can be efficiently used.

In the method described in FIG. 3, the digital twin is determined based on the multi-domain data information, to fuse the multi-domain data information, so that data for constructing the digital twin is more diversified. In addition, the digital twin can be used for network optimization, to improve service experience.

The method in embodiments of this application is described in detail above, and the following provides an apparatus in embodiments of this application.

FIG. 13 is a diagram of a structure of a communication apparatus 1300 according to an embodiment of this application. The communication apparatus 1300 may be a server, or may be a component (for example, a processor, a chip, or a chip system) in the server, or may be a logical module or software that can implement all or some functions of the server. The communication apparatus 1300 may include an obtaining unit 1301 and a first determining unit 1302. Details of each unit are as follows. The obtaining unit 1301 is configured to obtain multi-domain data information, where the multi-domain data information includes first data information and second data information, the first data information is data information related to user service experience, and the second data information is data information related to a wireless key performance indicator of a user service. The first determining unit 1302 is configured to determine a digital twin based on the multi-domain data information, where the digital twin includes entity objects and attribute information corresponding to the entity objects, the entity objects include a user entity object, a network function entity, a grid entity object, and a service entity object, the attribute information corresponding to the entity objects includes attribute information of the user entity object, attribute information of the network function entity, attribute information of the grid entity object, and attribute information of the service entity object, and the digital twin is used for network optimization.

In a possible implementation, the first data information includes one or more of the following: a user identifier, a service identifier, service type information, service experience information, and network quality data information, and the second data information includes one or more of the following: a network function entity identifier, a grid identifier, the user identifier, network function entity type information, and at least two wireless key performance indicators, where the wireless key performance indicators include reference signal received power RSRP, a signal to interference plus noise ratio SINR, and physical resource block PRB utilization.

In another possible implementation, the attribute information of the user entity object includes the user identifier; the attribute information of the network function entity includes the network function entity type information and the network function entity identifier; the attribute of the grid entity object includes the grid identifier and grid profile information, where the grid profile information includes grid location information and grid point of interest information; and the attribute of the service entity object includes the service type information and the service identifier.

In still another possible implementation, the digital twin further includes a relationship between the entity objects and time at which the entity objects are related, where the relationship between the entity objects includes one or more of the following: a relationship between the user entity object and the network function entity, a relationship between the user entity object and the grid entity object, a relationship between the user entity object and the service entity object, a relationship between the network function entity and the grid entity object, a relationship between the network function entity and the service entity object, and a relationship between the grid entity object and the service entity object.

In still another possible implementation, the apparatus further includes a mapping unit, where the mapping unit is configured to map the multi-domain data information to determine the grid entity object.

In still another possible implementation, the mapping unit is configured to: map the multi-domain data information in a longitude-latitude manner to determine the grid entity object; or map the multi-domain data information into a grid based on a cell to determine the grid entity object.

In still another possible implementation, the apparatus further includes a second determining unit. The second determining unit is configured to determine, based on the digital twin, a main factor affecting the service experience information from the at least two wireless key performance indicators, where the main factor is one of the at least two wireless key performance indicators.

In still another possible implementation, the second determining unit is configured to determine, based on the digital twin, at least two scores corresponding to the at least two wireless key performance indicators, where each wireless key performance indicator corresponds to one score. The second determining unit is configured to compare the at least two scores to determine the main factor affecting the service experience information, where the main factor is a wireless key performance indicator with a highest score.

In still another possible implementation, the apparatus further includes a third determining unit, where the third determining unit is configured to determine value indicators of different types of grids based on the digital twin; and the third determining unit is configured to determine value scores of the different types of grids based on the value indicators and weights corresponding to the value indicators.

In still another possible implementation, the multi-domain data information further includes one or more of the following: data information related to customer management and service, and third-party data information, where the data information related to customer management and service includes one or more of the following: a user package, and whether a user is a very very important person VVIP, and the third-party data information includes one or more of the following: population information, point of interest POI information, and information about a grid that is obtained through division by roads and that has a commercial attribute.

It should be noted that, for implementations and beneficial effects of each module, refer to corresponding descriptions in the method embodiment shown in FIG. 3.

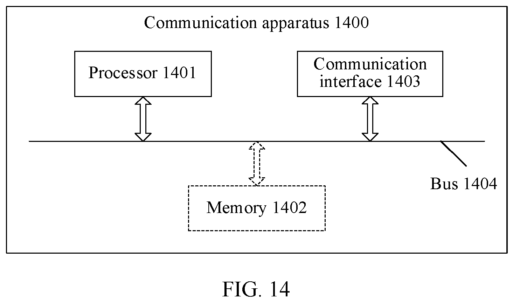

FIG. 14 is a diagram of a structure of a communication apparatus 1400 according to an embodiment of this application. The communication apparatus 1300 may be a server, or may be a component (for example, a processor, a chip, or a chip system) in the server, or may be a logical module or software that can implement all or some functions of the server. The communication apparatus 1400 includes at least one processor 1401 and a communication interface 1403, and optionally, further includes a memory 1402. The processor 1401, the memory 1402, and the communication interface 1403 are connected to each other through a bus 1404. The memory 1402 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1402 is configured to store a related computer program and related data. The communication interface 1403 is configured to receive and send data.

The processor 1401 may be one or more central processing units (central processing units, CPUs). When the processor 1401 is one CPU, the CPU may be a single-core CPU or a multicore CPU.

The processor 1401 in the communication apparatus 1400 is configured to read the computer program stored in the memory 1402 to perform the following operations: obtaining multi-domain data information, where the multi-domain data information includes first data information and second data information, the first data information is data information related to user service experience, and the second data information is data information related to a wireless key performance indicator of a user service; and determining a digital twin based on the multi-domain data information, where the digital twin includes entity objects and attribute information corresponding to the entity objects, the entity objects include a user entity object, a network function entity, a grid entity object, and a service entity object, the attribute information corresponding to the entity objects includes attribute information of the user entity object, attribute information of the network function entity, attribute information of the grid entity object, and attribute information of the service entity object, and the digital twin is used for network optimization.

In a possible implementation, the first data information includes one or more of the following: a user identifier, a service identifier, service type information, service experience information, and network quality data information, and the second data information includes one or more of the following: a network function entity identifier, a grid identifier, the user identifier, network function entity type information, and at least two wireless key performance indicators, where the wireless key performance indicators include reference signal received power RSRP, a signal to interference plus noise ratio SINR, and physical resource block PRB utilization.

In another possible implementation, the attribute information of the user entity object includes the user identifier; the attribute information of the network function entity includes the network function entity type information and the network function entity identifier; the attribute of the grid entity object includes the grid identifier and grid profile information, where the grid profile information includes grid location information and grid point of interest information; and the attribute of the service entity object includes the service type information and the service identifier.

In still another possible implementation, the digital twin further includes a relationship between the entity objects and time at which the entity objects are related, where the relationship between the entity objects includes one or more of the following: a relationship between the user entity object and the network function entity, a relationship between the user entity object and the grid entity object, a relationship between the user entity object and the service entity object, a relationship between the network function entity and the grid entity object, a relationship between the network function entity and the service entity object, and a relationship between the grid entity object and the service entity object.

In still another possible implementation, the processor 1401 is further configured to map the multi-domain data information to determine the grid entity object.

In still another possible implementation, the processor 1401 is configured to: map the multi-domain data information in a longitude-latitude manner to determine the grid entity object; or map the multi-domain data information into a grid based on a cell to determine the grid entity object.

In still another possible implementation, the processor 1401 is further configured to determine, based on the digital twin, a main factor affecting the service experience information from the at least two wireless key performance indicators, where the main factor is one of the at least two wireless key performance indicators.

In still another possible implementation, the processor 1401 is further configured to: determine, based on the digital twin, at least two scores corresponding to the at least two wireless key performance indicators, where each wireless key performance indicator corresponds to one score; and compare the at least two scores to determine the main factor affecting the service experience information, where the main factor is a wireless key performance indicator with a highest score.

In still another possible implementation, the processor 1401 is further configured to: determine value indicators of different types of grids based on the digital twin; and determine value scores of the different types of grids based on the value indicators and weights corresponding to the value indicators.

In still another possible implementation, the multi-domain data information further includes one or more of the following: data information related to customer management and service, and third-party data information, where the data information related to customer management and service includes one or more of the following: a user package, and whether a user is a very very important person VVIP, and the third-party data information includes one or more of the following: population information, point of interest POI information, and information about a grid that is obtained through division by roads and that has a commercial attribute.

It should be noted that, for implementation and beneficial effects of each operation, refer to corresponding descriptions in the method embodiment shown in FIG. 3.

An embodiment of this application further provides a chip apparatus. The chip apparatus includes at least one processor, and the at least one processor is configured to invoke a computer program or instructions stored in a memory, so that the processor performs the method provided in the embodiment shown in FIG. 3.

An embodiment of this application further provides a computer-readable storage medium. The computer-readable storage medium stores a computer program or instructions, and when the computer program or the instructions are run on a processor, the method provided in the embodiment shown in FIG. 3 is performed.

An embodiment of this application further provides a computer program product. The computer program product includes a computer program or instructions, and when the computer program or the instructions are run on a processor, the method provided in the embodiment shown in FIG. 3 is performed.

It can be understood that the processor in embodiments of this application may be a central processing unit (Central Processing Unit, CPU), or may be another general-purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by software, hardware, firmware, or any combination thereof. When software is used to implement embodiments, all or a part of embodiments may be implemented in a form of a computer program product. The computer program product includes one or more computer programs or instructions. When the computer program or the instructions are loaded and executed on a computer, procedures or functions in embodiments of this application are all or partially performed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or a logical conflict occurs, terms and/or descriptions in different embodiments are consistent and may be mutually referenced, and technical features in different embodiments may be combined based on an internal logical relationship thereof, to form a new embodiment.

In descriptions of this application, terms such as "first", "second", "S301", or "S302" are merely used for distinguishing descriptions and for ease of organizing this specification. Different sequence numbers do not have specific technical meanings, and cannot be understood as indicating or implying relative importance, or indicating or implying an execution sequence of operations. Execution sequences of the processes should be determined based on functions and internal logic of the processes.

A term "and/or" in this application merely describes an association relationship between associated objects, and indicates that three relationships may exist. For example, "A and/or B" may indicate the following three cases: Only A exists; both A and B exist; and only B exists, where A and B may be singular or plural. In addition, a character "/" in this specification indicates an "or" relationship between the associated objects.

In this application, "transmission" may include the following three cases: data sending, data receiving, or data sending and data receiving. In this application, "data" may include service data and/or signaling data.

In this application, terms "include", "have" and any other variants thereof are intended to cover non-exclusive inclusion, for example, a process/method that includes a series of steps, or a system/product/device that includes a series of units is not necessarily limited to those expressly listed steps or units, but may include other steps or units not explicitly listed or inherent to such a process/method/product/device.

In descriptions of this application, unless otherwise specified, a quantity of nouns means "a singular noun or a plural noun", that is, "one or more". "At least one" means one or more. "Including at least one of the following: A, B, and C" means that A may be included, B may be included, C may be included, A and B may be included, A and C may be included, B and C may be included, or A, B, and C may be included, where A, B, and C may be singular or plural.

## Claims

1. A communication method, comprising:
obtaining multi-domain data information, wherein the multi-domain data information comprises first data information and second data information, the first data information is data information related to user service experience, and the second data information is data information related to a wireless key performance indicator of a user service; and
determining a digital twin based on the multi-domain data information, wherein the digital twin comprises entity objects and attribute information corresponding to the entity objects, the entity objects comprise a user entity object, a network function entity, a grid entity object, and a service entity object, the attribute information corresponding to the entity objects comprises attribute information of the user entity object, attribute information of the network function entity, attribute information of the grid entity object, and attribute information of the service entity object, and the digital twin is used for network optimization.

2. The method according to claim 1, wherein
the first data information comprises one or more of the following: a user identifier, a service identifier, service type information, service experience information, and network quality data information, and the second data information comprises one or more of the following: a network function entity identifier, a grid identifier, the user identifier, network function entity type information, and at least two wireless key performance indicators, wherein the wireless key performance indicators comprise reference signal received power RSRP, a signal to interference plus noise ratio SINR, and physical resource block PRB utilization.

3. The method according to claim 1 or 2, wherein
the attribute information of the user entity object comprises the user identifier;
the attribute information of the network function entity comprises the network function entity type information and the network function entity identifier;
an attribute information of the grid entity object comprises the grid identifier and grid profile information, wherein the grid profile information comprises grid location information and grid point of interest information; and
an attribute information of the service entity object comprises the service type information and the service identifier.

4. The method according to any one of claims 1 to 3, wherein
the digital twin further comprises a relationship between the entity objects and time at which the entity objects are related, wherein the relationship between the entity objects comprises one or more of the following: a relationship between the user entity object and the network function entity, a relationship between the user entity object and the grid entity object, a relationship between the user entity object and the service entity object, a relationship between the network function entity and the grid entity object, a relationship between the network function entity and the service entity object, and a relationship between the grid entity object and the service entity object.

5. The method according to any one of claims 2 to 4, wherein the method further comprises:
determining, based on the digital twin, a main factor affecting the service experience information from the at least two wireless key performance indicators, wherein the main factor is one of the at least two wireless key performance indicators.

6. The method according to claim 5, wherein determining, based on the digital twin, the main factor affecting the service experience information from the at least two wireless key performance indicators comprises:
determining, based on the digital twin, at least two scores corresponding to the at least two wireless key performance indicators, wherein each wireless key performance indicator corresponds to one score; and
comparing the at least two scores to determine the main factor affecting the service experience information, wherein the main factor is a wireless key performance indicator with a highest score.

7. The method according to any one of claims 1 to 6, wherein the method further comprises:
determining value indicators of different types of grids based on the digital twin; and
determining value scores of the different types of grids based on the value indicators and weights corresponding to the value indicators.

8. The method according to any one of claims 1 to 7, wherein
the multi-domain data information further comprises one or more of the following: data information related to customer management and service, and third-party data information, wherein the data information related to customer management and service comprises one or more of the following: a user package, and whether a user is a very very important person VVIP; and the third-party data information comprises one or more of the following: population information, point of interest POI information, and information about a grid that is obtained through division by roads and that has a commercial attribute.

9. A communication apparatus, comprising an obtaining unit and a first determining unit, wherein
the obtaining unit is configured to obtain multi-domain data information, wherein the multi-domain data information comprises first data information and second data information, the first data information is data information related to user service experience, and the second data information is data information related to a wireless key performance indicator of a user service; and
the first determining unit is configured to determine a digital twin based on the multi-domain data information, wherein the digital twin comprises entity objects and attribute information corresponding to the entity object, the entity objects comprise a user entity object, a network function entity, a grid entity object, and a service entity object, the attribute information corresponding to the entity objects comprises attribute information of the user entity object, attribute information of the network function entity, attribute information of the grid entity object, and attribute information of the service entity object, and the digital twin is used for network optimization.

10. The apparatus according to claim 9, wherein
the first data information comprises one or more of the following: a user identifier, a service identifier, service type information, service experience information, and network quality data information, and the second data information comprises one or more of the following: a network function entity identifier, a grid identifier, the user identifier, network function entity type information, and at least two wireless key performance indicators, wherein the wireless key performance indicators comprise reference signal received power RSRP, a signal to interference plus noise ratio SINR, and physical resource block PRB utilization.

11. The apparatus according to claim 9 or 10, wherein
the attribute information of the user entity object comprises the user identifier;
the attribute information of the network function entity comprises the network function entity type information and the network function entity identifier;
an attribute information of the grid entity object comprises the grid identifier and grid profile information, wherein the grid profile information comprises grid location information and grid point of interest information; and
an attribute information of the service entity object comprises the service type information and the service identifier.

12. The apparatus according to any one of claims 9 to 11, wherein
the digital twin further comprises a relationship between the entity objects and time at which the entity objects are related, wherein the relationship between the entity objects comprises one or more of the following: a relationship between the user entity object and the network function entity, a relationship between the user entity object and the grid entity object, a relationship between the user entity object and the service entity object, a relationship between the network function entity and the grid entity object, a relationship between the network function entity and the service entity object, and a relationship between the grid entity object and the service entity object.

13. The apparatus according to any one of claims 10 to 12, wherein the apparatus further comprises a second determining unit, and
the second determining unit is configured to determine, based on the digital twin, a main factor affecting the service experience information from the at least two wireless key performance indicators, wherein the main factor is one of the at least two wireless key performance indicators.

14. The apparatus according to claim 13, wherein
the second determining unit is configured to determine, based on the digital twin, at least two scores corresponding to the at least two wireless key performance indicators, wherein each wireless key performance indicator corresponds to one score; and
the second determining unit is configured to compare the at least two scores to determine the main factor affecting the service experience information, wherein the main factor is a wireless key performance indicator with a highest score.

15. The apparatus according to any one of claims 9 to 14, wherein the apparatus further comprises a third determining unit,
the third determining unit is configured to determine value indicators of different types of grids based on the digital twin; and
the third determining unit is configured to determine value scores of the different types of grids based on the value indicators and weights corresponding to the value indicators.

16. The apparatus according to any one of claims 9 to 15, wherein
the multi-domain data information further comprises one or more of the following: data information related to customer management and service, and third-party data information, wherein the data information related to customer management and service comprises one or more of the following: a user package, and whether a user is a very very important person VVIP; and the third-party data information comprises one or more of the following: population information, point of interest POI information, and information about a grid that is obtained through division by roads and that has a commercial attribute.

17. A communication system, comprising a data collection system and a customer experience management system, wherein
the data collection system is configured to: collect multi-domain data information, wherein the multi-domain data information comprises first data information and second data information, the first data information is data information related to user service experience, and the second data information is data information related to a wireless key performance indicator of a user service; and send the multi-domain data information to the customer experience management system; and
the customer experience management system is configured to: receive the multi-domain data information; and determine a digital twin based on the multi-domain data information, wherein the digital twin comprises entity objects and attribute information corresponding to the entity objects, the entity objects comprise a user entity object, a network function entity, a grid entity object, and a service entity object, the attribute information corresponding to the entity objects comprises attribute information of the user entity object, attribute information of the network function entity, attribute information of the grid entity object, and attribute information of the service entity object, and the digital twin is used for network optimization.

18. The system according to claim 17, wherein
the first data information comprises one or more of the following: a user identifier, a service identifier, service type information, service experience information, and network quality data information, and the second data information comprises one or more of the following: a network function entity identifier, a grid identifier, the user identifier, network function entity type information, and at least two wireless key performance indicators, wherein the wireless key performance indicators comprise reference signal received power RSRP, a signal to interference plus noise ratio SINR, and physical resource block PRB utilization.

19. The system according to claim 17 or 18, wherein
the attribute information of the user entity object comprises the user identifier;
the attribute information of the network function entity comprises the network function entity type information and the network function entity identifier;
an attribute information of the grid entity object comprises the grid identifier and grid profile information, wherein the grid profile information comprises grid location information and grid point of interest information; and
an attribute information of the service entity object comprises the service type information and the service identifier.

20. The system according to any one of claims 17 to 19, wherein
the digital twin further comprises a relationship between the entity objects and time at which the entity objects are related, wherein the relationship between the entity objects comprises one or more of the following: a relationship between the user entity object and the network function entity, a relationship between the user entity object and the grid entity object, a relationship between the user entity object and the service entity object, a relationship between the network function entity and the grid entity object, a relationship between the network function entity and the service entity object, and a relationship between the grid entity object and the service entity object.

21. The system according to any one of claims 18 to 20, wherein
the customer experience management system is further configured to determine, based on the digital twin, a main factor affecting the service experience information from the at least two wireless key performance indicators, wherein the main factor is one of the at least two wireless key performance indicators.

22. A communication apparatus, wherein the apparatus comprises at least one processor and a communication interface, and the at least one processor invokes a computer program or instructions stored in a memory to perform the method according to any one of claims 1 to 8.

23. A computer-readable storage medium, wherein the computer-readable storage medium stores a computer program or instructions; and when the computer program or the instructions are run on a processor, the method according to any one of claims 1 to 8 is implemented.

24. A computer program product, wherein the computer program product comprises a computer program or instructions; and when the computer program or the instructions are run on a computer, the method according to any one of claims 1 to 8 is implemented.
